# EUROPÄISCHE PATENTSCHRIFT

(11) **EP 3 421 331 B1**
(45) Veröffentlichungstag und Bekanntmachung des Hinweises auf die Patenterteilung: **16.06.2021**
(21) Anmeldenummer: 17178832.6
(22) Anmeldetag: 29.06.2017
(51) Int. Cl.: B62D 25/02, B62D 25/04, B62D 29/00

(54) **SYSTEM EINES VERSTÄRKTEN STRUKTURELEMENTES EINES KRAFTFAHRZEUGS**
SYSTEM OF A REINFORCED STRUCTURAL ELEMENT OF A MOTOR VEHICLE
SYSTÈME D'UN ÉLÉMENT STRUCTUREL RENFORCÉ D'UN VÉHICULE AUTOMOBILE

(43) Veröffentlichungstag der Anmeldung: 02.01.2019
(73) Patentinhaber: SIKA TECHNOLOGY AG, 6340 Baar (CH)
(72) Erfinder: Niggemann, Stephan, 30655 Hannover (DE); Meier, Michael, 5443 Niederrohrdorf (CH); Moser, Fabian, 5614 Sarmensdorf (CH); Meister, Marcel, 8182 Hochfelden (CH); Ulmann, Stefan, 5621 Zufikon (CH)
(74) Vertreter: Sika Patent Attorneys

(56) Entgegenhaltungen:
- EP-A1- 1 930 231
- EP-A1- 2 154 052
- GB-A- 2 375 328
- US-A1- 2016 229 457
- US-B1- 6 467 834

## Beschreibung

Die Erfindung betrifft ein System eines verstärkten Strukturelementes eines Kraftfahrzeugs. Insbesondere betrifft die Erfindung ein System umfassend ein Strukturelement, ein Verstärkungselement und einen Klebstoff.

Vielfach weisen Bauelemente, wie beispielsweise Karosserien und/oder Rahmen von Fortbewegungsmitteln, insbesondere von Kraftfahrzeugen, Strukturen mit Hohlräumen auf, um leichtgewichtige Konstruktionen zu ermöglichen. Oft ist es dabei wünschenswert, diese Hohlräume und somit das Bauelement wesentlich zu verstärken, jedoch das geringe Gewicht beizubehalten.

Insbesondere im Automobilbau, aber auch im Flugzeug- und Bootsbau, werden deshalb Verstärkungselemente (englisch: reinforcer) verwendet, um Hohlräume zu verstärken.

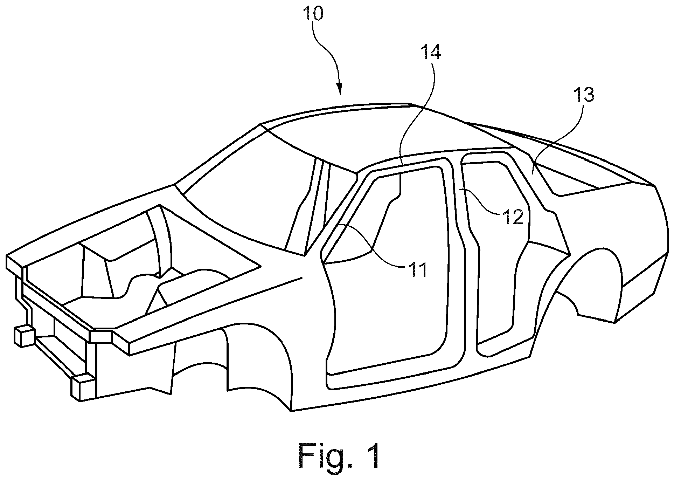

In Fig. 1 ist eine Karosserie eines Automobils schematisch dargestellt. Die Karosserie 10 weist dabei verschiedene Strukturen mit Hohlräumen auf, wie beispielsweise die A-Säule 11, die B-Säule 12, die C-Säule 13 und den Dachrahmen 14.

Solche und andere Hohlräume bzw. Strukturen in Karosserien von Kraftfahrzeugen werden üblicherweise mit Verstärkungselementen verstärkt, welche einen schäumbaren Klebstoff zur Verklebung des Verstärkungselementes im Strukturbauteil haben. Nachteilig an solchen bekannten Lösungen ist es, dass für Bereiche mit besonders hohen Anforderungen hinsichtlich einer verstärkten Struktur, wie beispielsweise die A-Säule oder der Dachrahmen, mit solchen bekannten Lösungen eine dadurch erzielbare Verstärkungswirkung nicht ausreichend ist. Insbesondere für Bauteile, welche wichtige Funktionen bei sehr hohen Lastfällen, wie sie bei Unfällen auftreten, übernehmen, ist eine möglichst hohe mechanische Verstärkungswirkung wünschenswert.

In US6467834B1 ist strukturelles Verstärkungssystem für Automobile offenbart, bei welchem einem Skelettelement und einem expandierbaren Material, wobei das expandierbare Material durch eine Expansion das Skelettelement in einem Hohlraum eines Rahmens des Automobiles.

In EP2154052A1 ist ein strukturelles Verstärkungssystem offenbart, bei welchem ein steifer Träger einen Einsatz aufweist, wobei der Träger in einem Strukturelement mit Hilfe eines expandierbaren Materiales befestigt wird. Der Einsatz kann dabei beispielsweise aus Metall gebildet sein.

Es ist daher eine Aufgabe dieser Erfindung, ein verbessertes System zur Verstärkung von Strukturelementen in Kraftfahrzeugen zur Verfügung zu stellen, welches einerseits weiterhin leichte Konstruktionen erlaubt, und andererseits sehr hohen Ansprüchen an eine mechanische Verstärkung des Strukturelementes genügt.

Diese Aufgabe wird gelöst durch ein System eines verstärkten Strukturelementes eines Kraftfahrzeuges, wobei das System umfasst: ein Strukturelement, welches ein erstes Blech und ein zweites Blech umfasst, wobei die Bleche an einer ersten Fügestelle und an einer zweiten Fügestelle miteinander verbunden sind, und wobei die Bleche im Bereich zwischen der ersten Fügestelle und der zweiten Fügestelle einen länglichen Hohlraum bilden, und wobei das zweite Blech im Bereich zwischen der ersten Fügestelle und der zweiten Fügestelle eine Ausbuchtung mit einem ersten Schenkel, welcher bei der ersten Fügestelle angeordnet ist, und mit einem zweiten Schenkel, welcher bei der zweiten Fügestelle angeordnet ist, hat; ein Verstärkungselement, welches eine erste Seitenwand, eine zweite Seitenwand und eine die Seitenwände verbindende Verbindungswand umfasst, und welches im Hohlraum des Strukturelementes angeordnet ist; und Klebstoff, welcher das Verstärkungselement mit dem Strukturelement verklebt; wobei die erste Seitenwand des Verstärkungselementes im Bereich der ersten Fügestelle angeordnet ist und die zweite Seitenwand des Verstärkungselementes im Bereich des zweiten Schenkels des zweiten Bleches angeordnet ist, so dass eine auf die erste Fügestelle in Richtung des Verstärkungselementes wirkende Kraft durch das Verstärkungselement mehrheitlich auf den zweiten Schenkel des zweiten Bleches übertragen wird.

Diese Lösung hat den Vorteil, dass dadurch markant verbesserte mechanische Verstärkungseigenschaften erzielt werden können, als dies mit herkömmlichen

Ein Kerngedanke der vorliegenden Erfindung besteht darin, dass das Verstärkungselement die Last im Lastfall am richtigen Ort aufnimmt (hier an der ersten Fügestelle) und breiter im Strukturelement verteilt (hier auf dem zweiten Schenkel des zweiten Bleches). Ausgehend von diesem Grundprinzip kann ein im Volumen reduziertes und daher gewichtsoptimiertes Verstärkungselement hergestellt werden, welches die gewünschten mechanischen Eigenschaften mitbringt, ohne dabei das Gewicht des Bauteils wesentlich zu erhöhen.

In einer beispielhaften Ausführungsform ist das Strukturelement Bestandteil einer A-Säule oder eines Dachrahmens einer Karosserie eines Kraftfahrzeugs.

Dies hat den Vorteil, dass dadurch besonders relevante Strukturen der Karosserie in einem Lastfall, wie er bei Unfällen auftritt, effizient verstärkt werden können.

In einer beispielhaften Ausführungsform ist das Verstärkungselement zumindest teilweise aus Kunststoff, faserverstärktem Kunststoff, Aluminium oder Magnesium aufgebaut.

Dies hat den Vorteil, dass dadurch leichte Verstärkungselemente realisierbar sind, welche den mechanischen Anforderungen für diese Anwendung genügen.

In einer beispielhaften Weiterbildung ist das Verstärkungselement zumindest teilweise aus glasfaserverstärktem Kunststoff oder aus karbonfaserverstärktem Kunststoff aufgebaut. Dabei können beispielsweise Endlosfasern, Kurzfasern oder Langfasern eingesetzt werden.

In einer beispielhaften Weiterbildung ist das Verstärkungselement zumindest teilweise aus Polyamid, insbesondere aus PA6 oder aus PA6.6, aufgebaut.

In einer beispielhaften Ausführungsform erstrecken sich die erste Seitenwand und die zweite Seitenwand des Verstärkungselementes auf einer selben Seite der Verbindungswand, oder es erstrecken sich die erste Seitenwand und die zweite Seitenwand des Verstärkungselementes auf unterschiedliche Seiten der Verbindungswand.

Die Verbindungswand des Verstärkungselementes überträgt in einem Lastfall die Kraft von der ersten Seitenwand auf die zweite Seitenwand und dadurch von der ersten Fügestelle zum zweiten Schenkel des zweiten Bleches. Dabei kann das Verstärkungselement einen im Wesentlichen C- oder U-förmigen Querschnitt aufweisen, so dass sich die erste und zweite Seitenwand auf derselben Seite der Verbindungswand erstrecken, oder aber das Verstärkungselement kann eine im Wesentlichen Z- oder S-förmigen Querschnitt aufweisen, so dass sich die erste und die zweite Seitenwand an unterschiedlichen Seiten der Verbindungswand erstrecken. Je nach Geometrie des Hohlraumes und je nach Anforderungen des Lastfalles kann hier eine geeignete Variante gewählt werden.

In einer beispielhaften Ausführungsform ist eine Wandstärke der ersten Seitenwand grösser als eine Wandstärke der zweiten Seitenwand.

Diesem Ausführungsbeispiel liegt die Erkenntnis zugrunde, dass die erste Seitenwand im Lastfall eine grössere Belastung erfährt als die zweite Seitenwand. Somit kann durch das gezielte Verstärken der ersten Seitenwand das Gesamtsystem verstärkt werden, ohne dass dabei das Gewicht unnötig erhöht würde.

In einer beispielhaften Weiterbildung beträgt eine Wandstärke der ersten Seitenwand von 2 bis 8 mm, bevorzugt von 3 bis 5 mm, und eine Wandstärke der zweiten Seitenwand beträgt von 1 bis 4 mm, bevorzugt von 2 bis 3 mm.

In einer beispielhaften Ausführungsform umfasst das Verstärkungselement Rippen, welche im Wesentlichen orthogonal zu einer Längsachse des Verstärkungselementes orientiert sind und welche die erste Seitenwand und die zweite Seitenwand miteinander verbinden.

"Im Wesentlichen orthogonal zur Längsachse" bedeutet in diesem Zusammenhang, dass die Rippen auch mit kleinen Abweichungen orthogonal zur Längsachse angeordnet sein können, da beispielsweise die Seitenwände des Verstärkungselementes nicht zwingend über eine gesamte Länge genau parallel zueinander verlaufen, sodass die Rippen nicht in jedem Fall genau orthogonal zur Längsachse angeordnet sind.

In einer beispielhaften Weiterbildung beträgt ein Abstand zwischen benachbarten Rippen, gemessen entlang der Längsachse des Verstärkungselementes, von 5 bis 50 mm, bevorzugt von 8 bis 40 mm, besonders bevorzugt von 10 bis 30 mm.

Das Vorsehen von Rippen im Innern des Verstärkungselementes hat den Vorteil, dass dadurch eine Kraftübertragung von der ersten Seitenwand auf die zweite Seitenwand weiter verbessert werden kann.

In einer beispielhaften Ausführungsform hat das Verstärkungselement eine Länge, gemessen in Richtung der Längsachse des Verstärkungselementes, von 200 bis 1200 mm, bevorzugt von 300 bis 1100 mm, besonders bevorzugt von 500 bis 800 mm.

In einer beispielhaften Ausführungsform hat die erste Seitenwand und/oder die zweite Seitenwand eine Breite, jeweils gemessen quer zur Längsachse des Verstärkungselementes, von 10 bis 50 mm, bevorzugt von 10 bis 40 mm, besonders bevorzugt von 10 bis 30 mm.

Das Ausbilden des Verstärkungselementes mit den oben angegebenen Dimensionen hat den Vorteil, dass dadurch insbesondere A-Säulen oder Dachrahmen auf ideale Weise verstärkt werden können. Es hat sich in Versuchen gezeigt, dass eine Breite der ersten und der zweiten Seitenwand von ungefähr 18 mm ausreicht, um die hier beschriebene Übertragung der Kraft von der ersten Fügestelle auf den zweiten Schenkel des zweiten Bleches zu gewährleisten. Somit ist es nicht nötig, ein grösseres Verstärkungselement und damit ein höheres Gewicht zu verwenden.

In einer beispielhaften Ausführungsform hat der Klebstoff eine Schichtdicke von 0,3 bis 7 mm, bevorzugt von 0,5 bis 5 mm, besonders bevorzugt von 1 bis 3 mm.

In Versuchen hat sich gezeigt, dass eine zu grosse Schichtdicke des Klebstoffes sich negativ auf die mechanischen Verstärkungseigenschaften des Systems auswirkt. Daher ist es vorteilhaft, den Klebstoff in der hier angegebenen Schichtdicke vorzusehen.

Bleches zu gewährleisten. Somit ist es nicht nötig, ein grösseres Verstärkungselement und damit ein höheres Gewicht zu verwenden.

In einer beispielhaften Ausführungsform hat der Klebstoff eine Schichtdicke von 0,3 bis 7 mm, bevorzugt von 0,5 bis 5 mm, besonders bevorzugt von 1 bis 3 mm.

In Versuchen hat sich gezeigt, dass eine zu grosse Schichtdicke des Klebstoffes sich negativ auf die mechanischen Verstärkungseigenschaften des Systems auswirkt. Daher ist es vorteilhaft, den Klebstoff in der hier angegebenen Schichtdicke vorzusehen.

Der Klebstoff ist ein nicht expandierbarer Klebstoff.

Im Zusammenhang dieser Erfindung bedeutet der Ausdruck "nicht expandierbar" ein Verhalten eines Materials, bei dem das Volumen des Materials sich um nicht mehr als 10% verändert. Somit werden Materialien, wie beispielsweise Klebstoffe, welche sich beispielsweise beim Aushärten leicht ausdehnen oder zusammenziehen, auch als nicht expandierbare Materialien verstanden.

Als "Expansionsrate" wird im Zusammenhang dieser Erfindung das Volumen verstanden, welches bei einer Expansion relativ zum bestehenden Volumen hinzukommt. Somit bedeutet eine Expansionsrate von 100% eine Verdoppelung des Volumens bei der Expansion.

Die Wahl eines nicht expandierbaren oder eines wenig expandierbaren Klebstoffs hat nun den Vorteil, dass die mechanischen Eigenschaften durch die Klebstoffschicht nicht zu stark verkleinert werden.

In einer beispielhaften Ausführungsform ist der Klebstoff ein Klebebandklebstoff, ein Formgedächtnisklebstoff, ein einspritzbarer Klebstoff, ein spritzgegossener Klebstoff oder ein aufextrudierter Klebstoff.

Dies hat den Vorteil, dass das hier vorgeschlagene Verstärkungselement mit unterschiedlichen Klebstoffsystemen kombiniert werden kann.

Ein solcher Klebebandklebstoff hat den Vorteil, dass dadurch eine Handhabung der Klebstoffanwendung vereinfacht wird. Insbesondere eine Dosierung des Klebstoffvolumens ist bei Klebebandklebstoffen einfach zu gewährleisten.

In einer alternativen Weiterbildung ist der Klebstoff ein Formgedächtnisklebstoff. Formgedächtnisklebstoffe, wie sie beispielsweise in den Dokumenten WO 2011/117398 und WO 2011/117402 beschrieben sind, können beispielsweise auf das Verstärkungselement aufgebracht werden und dann in eine angespannte Form gebracht werden. In dieser angespannten Form wird das Verstärkungselement mit dem Klebstoff in den Hohlraum gebracht. Durch eine Wärmeanwendung kann der Klebstoff wieder in seine ursprüngliche Form zurückgebracht werden, und dabei schliesst der Klebstoff eine Lücke zwischen Verstärkungselement und Strukturelement.

Der Vorteil solcher Formgedächtnisklebstoffe ist es, dass dadurch ein Spalt zwischen Verstärkungselement und Strukturelement besteht, um beispielsweise das Strukturelement zu lackieren, und dass gleichzeitig eine Verklebung mit sehr guten mechanischen Eigenschaften erzielt werden kann, weil der Formgedächtnisklebstoff nicht geschäumt werden muss.

In einer weiteren alternativen Weiterbildung ist der Klebstoff ein einspritzbarer Klebstoff. Ein System mit eingespritzten Klebstoffen ist beispielsweise in Dokument WO 2008/077944 dargestellt. Dabei wird zunächst das Verstärkungselement im Strukturelement angeordnet, und dann wird der flüssige Klebstoff in den Zwischenraum zwischen Verstärkungselement und Strukturelement eingebracht.

Dies hat den Vorteil, dass dabei sehr gute mechanische Eigenschaften der Klebstoffschicht erzielt werden können, weil der Klebstoff wiederum nicht geschäumt werden muss.

In einer weiteren beispielhaften Weiterbildung ist der Klebstoff ein spritzgegossener Klebstoff. Insbesondere hat der Klebstoff eine Expansionsrate von weniger als 400%, bevorzugt von weniger als 300%, besonders bevorzugt von weniger als 250%.

Dies hat den Vorteil, dass dabei sehr gute mechanische Eigenschaften der Klebstoffschicht erzielt werden können, weil der Klebstoff wiederum nicht geschäumt werden muss.

In einer weiteren alternativen Weiterbildung ist der Klebstoff ein aufextrudierter Klebstoff. Ein System mit einem solchen aufextrudierten Klebstoff ist beispielsweise in der WO 2014/124924 beschrieben.

Ein Vorteil von aufextrudierten Klebstoffen ist insbesondere, dass dadurch kein Spalt zwischen Verstärkungselement und Strukturelement überwunden werden muss, und dass folglich keine Schäumung und dadurch mechanische Schwächung des Klebstoffes notwendig ist.

Als aufextrudierte Klebstoff können beispielsweise Klebstoffe verwendet werden, welche unter dem Handelsnamen SikaPower® erhältlich sind.

Als einspritzbare Klebstoffe können beispielsweise Klebstoffe verwendet werden, welche unter dem Handelsnamen SikaPower® erhältlich sind.

In einer beispielhaften Ausführungsform beträgt ein Querschnitt des Verstärkungselementes weniger als 70%, bevorzugt weniger als 60%, besonders bevorzugt weniger als 50% eines Querschnitts des Strukturelementes, an derselben Stelle gemessen.

Der Vorteil von einem Verstärkungselement mit geringem Querschnitt ist es, dass dadurch ein gewichtsoptimiertes Bauteil erzielbar ist. Zudem kann dank offenen Bereichen im Hohlraum eine Flüssigkeit zur Tauchlackierung der Karosserie besser zirkulieren.

In einer beispielhaften Ausführungsform beträgt ein äusserer Hohlraum, welcher frei ist vom Verstärkungselement und Klebstoff, zumindest 25%, bevorzugt zumindest 30%, besonders bevorzugt zumindest 35% eines Querschnitts des Strukturelementes, an derselben Stelle gemessen.

Der Vorteil eines solchen freien äusseren Hohlraums ist es, dass dadurch ein Bereich des Hohlraums freigelassen wird, an welchem wenig zusätzliche mechanische Verstärkung

In einer beispielhaften Ausführungsform beträgt ein äusserer Hohlraum, welcher frei ist vom Verstärkungselement und Klebstoff, zumindest 25%, bevorzugt zumindest 30%, besonders bevorzugt zumindest 35% eines Querschnitts des Strukturelementes, an derselben Stelle gemessen.

Der Vorteil eines solchen freien äusseren Hohlraums ist es, dass dadurch ein Bereich des Hohlraums freigelassen wird, an welchem wenig zusätzliche mechanische Verstärkung erzielbar ist. Somit wird das Gewicht des Bauteils, insbesondere des Verstärkungselements, in Bereichen des Hohlraums eingesetzt, in welchen die Lastverteilung von der ersten Fügestelle auf den zweiten Schenkel des zweiten Bleches besonders effizient nutzbar ist.

In einer beispielhaften Ausführungsform ist die Verbindungswand des Verstärkungselementes zumindest teilweise frei von Klebstoff und/oder ist der Klebstoff auf der ersten Seitenwand nicht verbunden mit dem Klebstoff auf der zweiten Seitenwand.

Das Anordnen des Klebstoffs auf der ersten Seitenwand und auf der zweiten Seitenwand und zumindest teilweise nicht auf der Verbindungswand hat den Vorteil, dass der Klebstoff gezielt an denjenigen Orten eingesetzt wird, an welchen eine Verbindung von Verstärkungselement und Strukturelement wirksam zu den mechanischen Eigenschaften des Bauteils beiträgt. Das Vorsehen von zwei getrennten Klebstoffbereichen hat den Vorteil, dass eine Applikation des Klebstoffs vereinfacht wird, insbesondere bei Klebebandklebstoffen und bei aufextrudierten Klebstoffen.

In einer beispielhaften Ausführungsform ist ein erster Klebstoff bei der ersten Seitenwand angeordnet und ein zweiter Klebstoff ist bei der zweiten Seitenwand angeordnet.

In einer beispielhaften Weiterbildung sind der erste Klebstoff und der zweite Klebstoff gleiche Klebstoffe.

In einer alternativen Weiterbildung sind der erste Klebstoff und der zweite Klebstoff unterschiedliche Klebstoffe. Beispielsweise kann der erste Klebstoff als eine andere Expansionsrate oder eine andere Zusammensetzung als der zweite Klebstoff aufweisen.

In einer beispielhaften Ausführungsform ist auf der Verbindungswand und/oder auf der Vorderwand und/oder auf der Rückwand des Verstärkungselementes ein Abdichtungs- oder Schalldämmungsmaterial angeordnet.

In einer beispielhaften Weiterbildung hat dieses Abdichtungs- oder Schalldämmungsmaterial eine Expansionsrate von mehr als 500%, bevorzugt von mehr als 1000%, besonders bevorzugt von mehr als 1500%.

Das Anbringen von Abdichtungs- oder Schalldämmungsmaterial an den genannten Stellen hat den Vorteil, dass das Strukturelement mit einem darin angeordneten Element gleichzeitig verstärkt und abgedichtet werden kann.

Als Abdichtungs- oder Schalldämmungsmaterial kann beispielsweise ein expandierbares Material eingesetzt werden, welches unter dem Handelsnamen SikaBaffle® 450 erhältlich ist.

Einzelheiten und Vorteile der Erfindung werden im Folgenden anhand von Ausführungsbeispielen und mit Bezug auf schematische Zeichnungen beschrieben.

Es zeigen:
- Fig. 1: eine beispielhafte Darstellung einer Karosserie eines Kraftfahrzeugs;
- Fig. 2a: eine beispielhafte Darstellung eines Verstärkungselementes in einem Strukturelement;
- Fig. 2b: eine beispielhafte Darstellung eines Verstärkungselementes;
- Fig. 3a und 3b: eine beispielhafte Darstellung eines Verstärkungselementes;
- Fig. 4: eine beispielhafte Darstellung eines Querschnitts eines Systems eines verstärkten Strukturelementes; und
- Fig. 5a und 5b: eine beispielhafte Darstellung eines Querschnitts eines Systems eines verstärkten Strukturelementes.

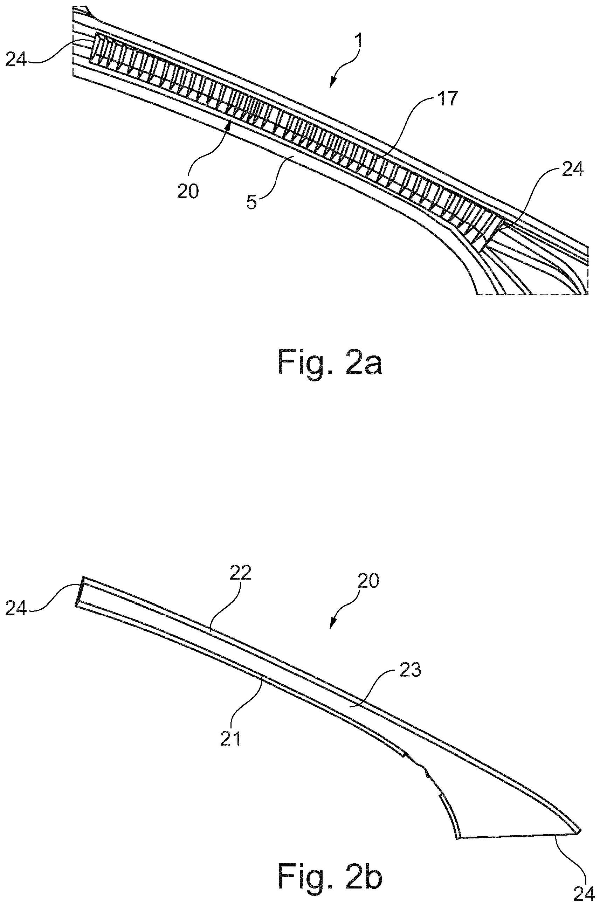

In Fig. 2a ist ein beispielhaftes System 1 eines verstärkten Strukturelementes eines Kraftfahrzeugs dargestellt, wobei in dieser Darstellung nur das zweite Blech 5 des Strukturelementes dargestellt ist. Das erste Blech ist auf dieser Darstellung weggelassen, so dass das Verstärkungselement 20 sichtbar ist. Das längliche Verstärkungselement 20 ist im länglichen Hohlraum des Strukturelementes angeordnet. Das Verstärkungselement 20 hat dabei eine Vorder- und eine Rückwand 24. Weiterhin hat das Verstärkungselement 20 Rippen 17, welche im Wesentlichen orthogonal zur Längsachse des Verstärkungselementes orientiert sind und zudem die erste Seitenwand 21 mit der zweiten Seitenwand 22 verbinden. In diesem Beispiel wird deutlich, dass die Rippen 17 in Bereichen des Verstärkungselementes 20, in welchen die Seitenwände nicht parallel zueinander verlaufen, leicht abweichen können in ihrer Anordnung relativ zur Längsachse, wie dies hier in einem Bereich eines unteren Endes des Verstärkungselementes 20 der Fall ist.

In Fig. 2b ist ein beispielhaftes Verstärkungselement 20 ohne Strukturelement abgebildet. Das Verstärkungselement 20 hat eine erste Seitenwand 21 und eine zweite Seitenwand 22, und eine die Seitenwände verbindende Verbindungswand 23. Das Verstärkungselement 20 hat in diesem Ausführungsbeispiel weiterhin eine Vorder- und eine Rückwand 24. Rippen sind auf dieser Abbildung nicht ersichtlich, da diese durch die Verbindungswand 23 verdeckt sind.

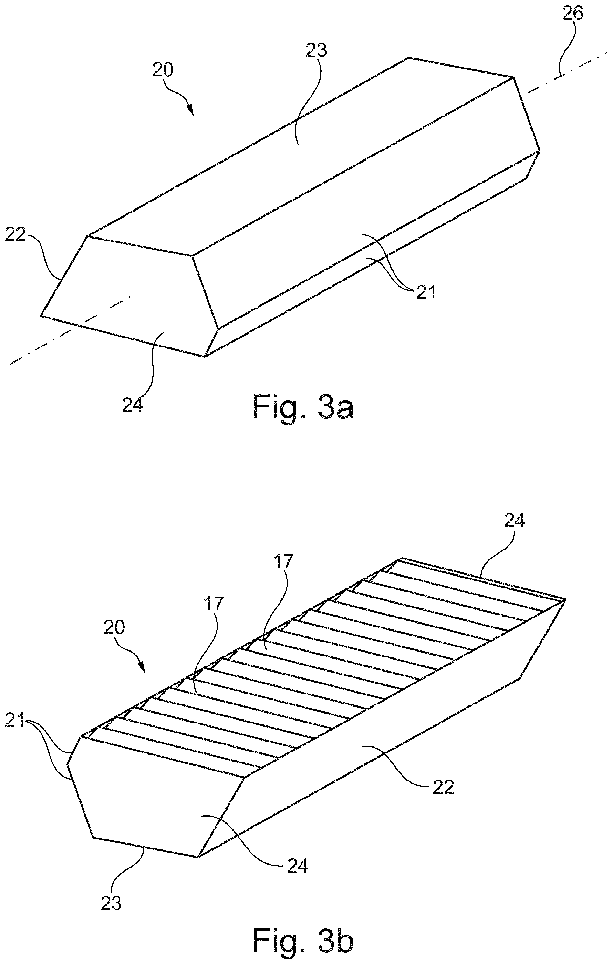

In den Fig. 3a und 3b ist ein weiteres beispielhaftes schematisches Verstärkungselement 20 dargestellt. Dabei ist in Fig. 3a die Verbindungswand 23 des Verstärkungselementes 20 nach oben gerichtet, und in Fig. 3b ist die Verbindungswand 23 des Verstärkungselementes 20 nach unten gerichtet. Das Verstärkungselement 20 hat eine Längsachse 26 und eine erste Seitenwand 21 und eine zweite Seitenwand 22. In diesem Ausführungsbeispiel weist die erste Seitenwand 21 eine Biegung auf, so dass die erste Seitenwand 21 nicht in einer Ebene liegt.

Das Verstärkungselement 20 hat zudem eine Vorder- und eine Rückwand 24 sowie Rippen 17. Wiederum sind die Rippen 17 im Wesentlichen orthogonal zur Längsachse 26 des Verstärkungselementes 20 angeordnet.

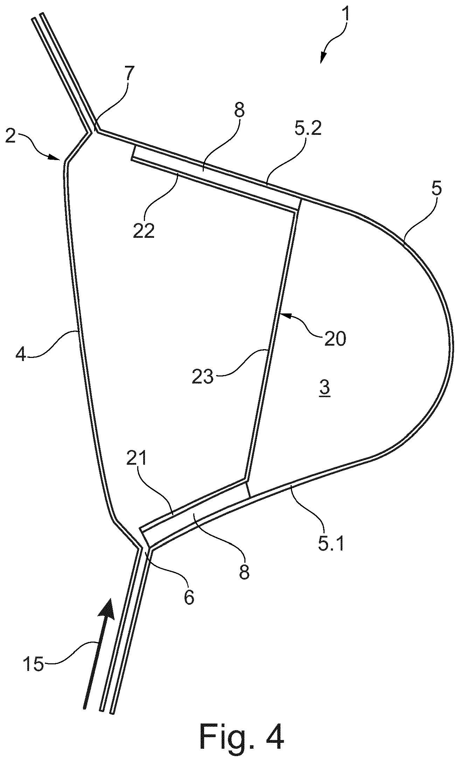

In Fig. 4 ist ein beispielhafter Querschnitt eines Systems 1 eines verstärkten Strukturelementes 2 dargestellt. Das Strukturelement 2 umfasst dabei ein erstes Blech 4 und ein zweites Blech 5. Das erste Blech 4 und das zweite Blech 5 sind an einer ersten Fügestelle 6 und an einer zweiten Fügestelle 7 miteinander verbunden. Zwischen der ersten Fügestelle 6 und der zweiten Fügestelle 7 bilden das erste Blech 4 und das zweite Blech 5 einen Hohlraum 3. Dabei hat das zweite Blech 5 eine Ausbuchtung, wobei ein erster Schenkel 5.1, welcher bei der ersten Fügestelle 6 angeordnet ist, und einen zweiten Schenkel 5.2, welcher bei der zweiten Fügestelle 7 angeordnet ist.

Im Hohlraum 3 dieses Strukturelementes 2 ist nun das Verstärkungselement 20 angeordnet. Das Verstärkungselement 20 hat wiederum eine Verbindungswand 23 sowie eine erste Seitenwand 21 und eine zweite Seitenwand 22. Dabei ist die erste Seitenwand 21 im Bereich der ersten Fügestelle 6 angeordnet, und die zweite Seitenwand 22 ist im Bereich des zweiten Schenkels 5.2 des zweiten Bleches 5 angeordnet. Die erste Seitenwand 21 und die zweite Seitenwand 22 sind jeweils mit Klebstoff 8 mit dem Strukturelement 2 verklebt. Dabei kann insbesondere die erste Seitenwand 21 nur mit dem zweiten Blech 5, oder aber mit dem ersten Blech 4 und mit dem zweiten Blech 5 verklebt sein. In diesem Ausführungsbeispiel ist die erste Seitenwand 21 im Bereich der ersten Fügestelle 6 angeordnet und dabei nur mit dem zweiten Blech 5 verklebt.

Eine Kraft 15, welche auf die erste Fügestelle 6 in Richtung des Hohlraumes 3 bzw. des Verstärkungselementes 20 wirkt, wird nun vom Verstärkungselement 20 mehrheitlich auf den zweiten Schenkel 5.2 des zweiten Bleches 5 übertragen.

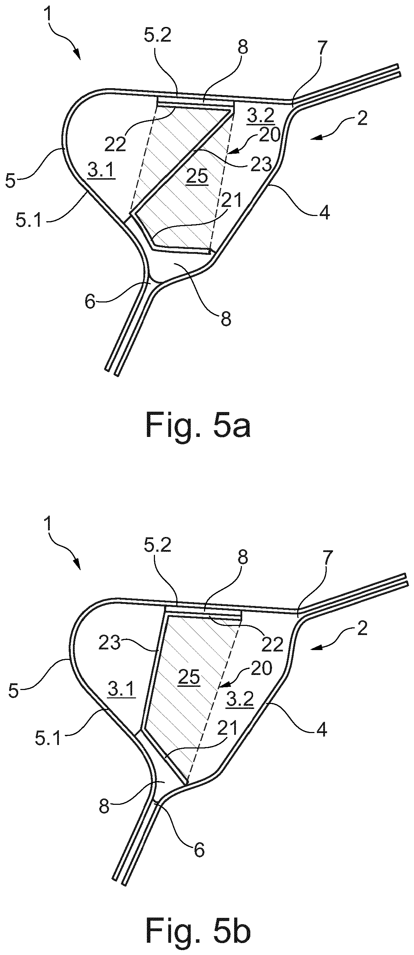

In den Fig. 5a und 5b sind zwei alternative Querschnitte eines Systems 1 eines verstärkten Strukturelementes 2 dargestellt. Im Ausführungsbeispiel gemäss Fig. 5a hat das Verstärkungselement 20 einen im Wesentlichen Z- oder S-förmigen Querschnitt, und im Ausführungsbeispiel gemäss Fig. 5b hat das Verstärkungselement 20 einen im Wesentlichen C- oder U-förmigen Querschnitt.

In beiden Ausführungsbeispielen hat der Hohlraum 3 des Strukturelementes 2 einen äusseren Hohlraum 3.1 und einen inneren Hohlraum 3.2, welche jeweils frei sind vom Verstärkungselement 20 und vom Klebstoff 8, bzw. frei sind vom Querschnitt 25 des Verstärkungselementes 20. Diese freien Hohlräume, insbesondere der äussere Hohlraum 3.1, vereinfachen das Zirkulieren einer Lackflüssigkeit bei einer Tauchlackierung der Karosserie. Zudem wird durch eine Verringerung der Querschnittsfläche 25 des Verstärkungselementes 20 ein leichteres Bauteil ermöglicht.

In den Ausführungsbeispielen der Fig. 5a und 5b ist die erste Seitenwand 21im Bereich der ersten Fügestelle 6 angeordnet und dabei sowohl mit dem ersten Blech 4 als auch mit dem zweiten Blech 5 verklebt.

### Bezugszeichenliste

- 1: System
- 2: Strukturelement
- 3: Hohlraum
- 3.1: äusserer Hohlraum
- 3.2: innerer Hohlraum
- 4: erstes Blech
- 5: zweites Blech
- 5.1: erster Schenkel
- 5.2: zweiter Schenkel
- 6: erste Fügestelle
- 7: zweite Fügestelle
- 8: Klebstoff
- 10: Karosserie
- 11: A-Säule
- 12: B-Säule
- 13: C-Säule
- 14: Dachrahmen
- 15: Kraft auf die erste Fügestelle in Richtung des Verstärkungselementes
- 17: Rippen
- 20: Verstärkungselement
- 21: erste Seitenwand
- 22: zweite Seitenwand
- 23: Verbindungswand
- 24: Vorder-/Rückwand
- 25: Querschnittsfläche des Verstärkungselementes
- 26: Längsachse des Verstärkungselementes

## Patentansprüche

1. System (1) eines verstärkten Strukturelementes (2) eines Kraftfahrzeuges, das System (1) umfassend:
ein Strukturelement (2), welches ein erstes Blech (4) und ein zweites Blech (5) umfasst, wobei die Bleche (4, 5) an einer ersten Fügestelle (6) und an einer zweiten Fügestelle (7) miteinander verbunden sind, und wobei die Bleche (4, 5) im Bereich zwischen der ersten Fügestelle (6) und der zweiten Fügestelle (7) einen länglichen Hohlraum (3) bilden, und wobei das zweite Blech (5) im Bereich zwischen der ersten Fügestelle (6) und der zweiten Fügestelle (7) eine Ausbuchtung mit einem ersten Schenkel (5.1), welcher bei der ersten Fügestelle (6) angeordnet ist, und mit einem zweiten Schenkel (5.2), welcher bei der zweiten Fügestelle (7) angeordnet ist, hat;
ein Verstärkungselement (20), welches eine erste Seitenwand (21), eine zweite Seitenwand (22) und eine die Seitenwände (21, 22) verbindende Verbindungswand (23) umfasst, und welches im Hohlraum (3) des Strukturelementes (2) angeordnet ist; und
Klebstoff (8), welcher das Verstärkungselement (20) mit dem Strukturelement (2) verklebt;
wobei die erste Seitenwand (21) des Verstärkungselementes (20) im Bereich der ersten Fügestelle (6) angeordnet ist und die zweite Seitenwand (22) des Verstärkungselementes (20) im Bereich des zweiten Schenkels (5.2) des zweiten Bleches (5) angeordnet ist, so dass eine auf die erste Fügestelle (6) in Richtung des Verstärkungselementes (20) wirkende Kraft (15) durch das Verstärkungselement (20) mehrheitlich auf den zweiten Schenkel (5.2) des zweiten Bleches (5) übertragen wird, **dadurch gekennzeichnet, dass** der Klebstoff (8) ein nicht expandierbarer Klebstoff ist.

2. System (1) nach Anspruch 1, wobei das Strukturelement (2) Bestandteil einer A-Säule (11) oder eines Dachrahmens (14) einer Karosserie (10) eines Kraftfahrzeugs ist.

3. System (1) nach einem der Ansprüche 1 oder 2, wobei das Verstärkungselement (20) zumindest teilweise aus faserverstärktem Kunststoff oder aus Kunststoff oder aus Aluminium oder aus Magnesium aufgebaut ist.

4. System (1) nach einem der vorhergehenden Ansprüche, wobei sich die erste Seitenwand (21) und die zweite Seitenwand (22) des Verstärkungselementes (20) auf eine selbe Seite der Verbindungswand (23) erstrecken, oder wobei sich die erste Seitenwand (21) und die zweite Seitenwand (22) des Verstärkungselementes (20) auf unterschiedliche Seiten der Verbindungswand (23) erstrecken.

5. System (1) nach einem der vorhergehenden Ansprüche, wobei eine Wandstärke der ersten Seitenwand (21) grösser ist als eine Wandstärke der zweiten Seitenwand (22).

6. System (1) nach einem der vorhergehenden Ansprüche, wobei eine Breite der ersten Seitenwand (21) und/oder der zweiten Seitenwand (22), gemessen quer zu einer Längsachse (26) des Verstärkungselementes (20), von 10 bis 35 mm beträgt.

7. System (1) nach einem der vorhergehenden Ansprüche, wobei das Verstärkungselement (20) Rippen (17) umfasst, welche im Wesentlichen orthogonal zu einer Längsachse (26) des Verstärkungselementes (20) orientiert sind und welche die erste Seitenwand (21) und die zweite Seitenwand (22) miteinander verbinden.

8. System (1) nach einem der vorhergehenden Ansprüche, wobei das Verstärkungselement (20) eine Länge, gemessen in Richtung der Längsachse (26) des Verstärkungselementes (20), von 200 bis 1200 mm hat.

9. System (1) nach einem der vorhergehenden Ansprüche, wobei der Klebstoff (8) eine Schichtdicke von 0,3 bis 7 mm hat.

10. System (1) nach einem der vorhergehenden Ansprüche, wobei der Klebstoff (8) ein Klebebandklebstoff, ein Formgedächtnisklebstoff, ein einspritzbarer Klebstoff oder ein aufextrudierter Klebstoff ist.

11. System (1) nach einem der vorhergehenden Ansprüche, wobei ein Querschnitt des Verstärkungselementes (20) weniger als 70% eines Querschnitts des Strukturelementes (2) beträgt, an derselben Stelle gemessen.

12. System (1) nach einem der vorhergehenden Ansprüche, wobei ein äusserer Hohlraum (3.1), welcher frei ist von Verstärkungselement (20) und Klebstoff (8), zumindest 25% eines Querschnitts des Strukturelementes (2) beträgt, an derselben Stelle gemessen.

13. System (1) nach einem der vorhergehenden Ansprüche, wobei die Verbindungswand (23) des Verstärkungselementes (20) zumindest teilweise frei ist von Klebstoff (8) und/oder wobei der Klebstoff (8) auf der ersten Seitenwand (21) nicht verbunden ist mit dem Klebstoff (8) auf der zweiten Seitenwand (22).

14. System (1) nach einem der vorhergehenden Ansprüche, wobei auf der Verbindungswand (23) und/oder auf der Vorderwand (24) und/oder auf der Rückwand (24) ein Abdichtungs- oder Schalldämmungsmaterial angeordnet ist.

## Claims

1. System (1) of a reinforced structural element (2) of a motor vehicle, the system (1) comprising:
a structural element (2) which comprises a first sheet (4) and a second sheet (5), wherein the sheets (4, 5) are connected to one another at a first joining point (6) and at a second joining point (7), and wherein the sheets (4, 5) form an elongate cavity (3) in the region between the first joining point (6) and the second joining point (7), and wherein the second sheet (5) has, in the region between the first joining point (6) and the second joining point (7), a bulge with a first leg (5.1) arranged at the first joining point (6) and with a second leg (5.2) arranged at the second joining point (7);
a reinforcing element (20) which comprises a first side wall (21), a second side wall (22) and a connecting wall (23) connecting the side walls (21, 22), and which is arranged in the cavity (3) of the structural element (2); and
adhesive (8) which bonds the reinforcing element (20) to the structural element (2);
wherein the first side wall (21) of the reinforcing element (20) is arranged in the region of the first joining point (6) and the second side wall (22) of the reinforcing element (20) is arranged in the region of the second leg (5.2) of the second sheet (5) so that the larger portion of a force (15) acting on the first joining point (6) in the direction of the reinforcing element (20) is transferred, by the reinforcing element (20), to the second leg (5.2) of the second sheet (5), **characterized in that** the adhesive (8) is a non-expandable adhesive.

2. System (1) according to Claim 1, wherein the structural element (2) is part of an A-pillar (11) or of a roof frame (14) of a body (10) of a motor vehicle.

3. System (1) according to either of Claims 1 and 2, wherein the reinforcing element (20) is constructed at least in part of fibre-reinforced plastic or of plastic or of aluminium or of magnesium.

4. System (1) according to one of the preceding claims, wherein the first side wall (21) and the second side wall (22) of the reinforcing element (20) extend on the same side of the connecting wall (23), or wherein the first side wall (21) and the second side wall (22) of the reinforcing element (20) extend on different sides of the connecting wall (23).

5. System (1) according to one of the preceding claims, wherein a wall thickness of the first side wall (21) is greater than a wall thickness of the second side wall (22) .

6. System (1) according to one of the preceding claims, wherein a breadth of the first side wall (21) and/or of the second side wall (22), measured transversely to a longitudinal axis (26) of the reinforcing element (20), is between 10 and 35 mm.

7. System (1) according to one of the preceding claims, wherein the reinforcing element (20) comprises ribs (17) which are oriented essentially orthogonal to a longitudinal axis (26) of the reinforcing element (20), and which connect the first side wall (21) and the second side wall (22) to one another.

8. System (1) according to one of the preceding claims, wherein the reinforcing element (20) has a length, measured in the direction of the longitudinal axis (26) of the reinforcing element (20), of 200 to 1200 mm.

9. System (1) according to one of the preceding claims, wherein the adhesive (8) has a layer thickness of 0.3 to 7 mm.

10. System (1) according to one of the preceding claims, wherein the adhesive (8) is a tape adhesive, a shape memory adhesive, an injectable adhesive or an extruded adhesive.

11. System (1) according to one of the preceding claims, wherein a cross section of the reinforcing element (20) constitutes less than 70% of a cross section of the structural element (2), measured at the same point.

12. System (1) according to one of the preceding claims, wherein an outer cavity (3.1), which is free from reinforcing element (20) and adhesive (8), constitutes at least 25% of a cross section of the structural element (2), measured at the same point.

13. System (1) according to one of the preceding claims, wherein the connecting wall (23) of the reinforcing element (20) is at least partially free from adhesive (8) and/or wherein the adhesive (8) on the first side wall (21) is not connected to the adhesive (8) on the second side wall (22).

14. System (1) according to one of the preceding claims, wherein a sealing or noise-attenuating material is arranged on the connecting wall (23) and/or on the front wall (24) and/or on the rear wall (24).

## Revendications

1. Système (1) d'un élément structural renforcé (2) d'un véhicule automobile, le système (1) comprenant :
un élément structural (2), qui comprend une première tôle (4) et une deuxième tôle (5), les tôles (4, 5) étant reliées l'une à l'autre à un premier point de jonction (6) et à un deuxième point de jonction (7), et les tôles (4, 5) formant dans la zone entre le premier point de jonction (6) et le deuxième point de jonction (7) une chambre creuse allongée (3), et la deuxième tôle (5) ayant dans la zone entre le premier point de jonction (6) et le deuxième point de jonction (7) un bombement muni d'une première branche (5.1), qui est agencée au niveau du premier point de jonction (6), et muni d'une deuxième branche (5.2), qui est agencée au niveau du deuxième point de jonction (7) ;
un élément de renforcement (20), qui comprend une première paroi latérale (21), une deuxième paroi latérale (22) et une paroi de liaison (23) reliant les parois latérales (21, 22), et qui est agencé dans la chambre creuse (3) de l'élément structural (2) ; et
un adhésif (8), qui colle l'élément de renforcement (20) à l'élément structural (2) ;
dans lequel la première paroi latérale (21) de l'élément de renforcement (20) est agencée dans la zone du premier point de jonction (6) et la deuxième paroi latérale (22) de l'élément de renforcement (20) est agencée dans la zone de la deuxième branche (5.2) de la deuxième tôle (5), de telle sorte qu'une force (15) agissant sur le premier point de jonction (6) en direction de l'élément de renforcement (20) soit transférée par l'élément de renforcement (20) majoritairement à la deuxième branche (5.2) de la deuxième tôle (5),
**caractérisé en ce que** l'adhésif (8) est un adhésif non expansible.

2. Système (1) selon la revendication 1, dans lequel l'élément structural (2) est un constituant d'un montant A (11) ou d'un cadre de toit (14) d'une carrosserie (10) d'un véhicule automobile.

3. Système (1) selon l'une quelconque des revendications 1 ou 2, dans lequel l'élément de renforcement (20) est formé au moins partiellement en matière plastique renforcée par des fibres ou en matière plastique ou en aluminium ou en magnésium.

4. Système (1) selon l'une quelconque des revendications précédentes, dans lequel la première paroi latérale (21) et la deuxième paroi latérale (22) de l'élément de renforcement (20) s'étendent sur un même côté de la paroi de liaison (23), ou dans lequel la première paroi latérale (21) et la deuxième paroi latérale (22) de l'élément de renforcement (20) s'étendent sur des côtés différents de la paroi de liaison (23).

5. Système (1) selon l'une quelconque des revendications précédentes, dans lequel une épaisseur de paroi de la première paroi latérale (21) est supérieure à une épaisseur de paroi de la deuxième paroi latérale (22).

6. Système (1) selon l'une quelconque des revendications précédentes, dans lequel une largeur de la première paroi latérale (21) et/ou de la deuxième paroi latérale (22), mesurée perpendiculairement à un axe longitudinal (26) de l'élément de renforcement (20), est de 10 à 35 mm.

7. Système (1) selon l'une quelconque des revendications précédentes, dans lequel l'élément de renforcement (20) comprend des nervures (17), qui sont orientées essentiellement orthogonalement par rapport à un axe longitudinal (26) de l'élément de renforcement (20), et qui relient la première paroi latérale (21) et la deuxième paroi latérale (22) l'une à l'autre.

8. Système (1) selon l'une quelconque des revendications précédentes, dans lequel l'élément de renforcement (20) a une longueur, mesurée dans la direction de l'axe longitudinal (26) de l'élément de renforcement (20), de 200 à 1 200 mm.

9. Système (1) selon l'une quelconque des revendications précédentes, dans lequel l'adhésif (8) a une épaisseur de couche de 0,3 à 7 mm.

10. Système (1) selon l'une quelconque des revendications précédentes, dans lequel l'adhésif (8) est un adhésif à bande adhésive, un adhésif à mémoire de forme, un adhésif injectable ou un adhésif extrudé.

11. Système (1) selon l'une quelconque des revendications précédentes, dans lequel une section transversale de l'élément de renforcement (20) est de moins de 70 % d'une section transversale de l'élément structural (2), mesurée au même point.

12. Système (1) selon l'une quelconque des revendications précédentes, dans lequel une chambre creuse extérieure (3.1), qui est exempte d'élément de renforcement (20) et d'adhésif (8), est d'au moins 25 % d'une section transversale de l'élément structural (2), mesurée au même point.

13. Système (1) selon l'une quelconque des revendications précédentes, dans lequel la paroi de liaison (23) de l'élément de renforcement (20) est au moins partiellement exempte d'adhésif (8) et/ou dans lequel l'adhésif (8) sur la première paroi latérale (21) n'est pas relié à l'adhésif (8) sur la deuxième paroi latérale (22).

14. Système (1) selon l'une quelconque des revendications précédentes, dans lequel un matériau d'étanchéification ou d'isolation acoustique est agencé sur la paroi de liaison (23) et/ou sur la paroi avant (24) et/ou sur la paroi arrière (24).
